# EUROPÄISCHE PATENTSCHRIFT

(11) **EP 3 090 312 B1**
(45) Veröffentlichungstag und Bekanntmachung des Hinweises auf die Patenterteilung: **19.09.2018**
(21) Anmeldenummer: 15747783.7
(22) Anmeldetag: 31.07.2015
(51) Int. Cl.: G05B 19/042

(54) **VERFAHREN UND SYSTEM ZUM PROGRAMMIEREN EINES SENSORNETZWERKS**
METHOD AND SYSTEM FOR PROGRAMMING A SENSOR NETWORK
PROCÉDÉ ET SYSTÈME DE PROGRAMMATION D'UN RÉSEAU DE CAPTEURS

(30) Priorität: 06.08.2014 DE 102014215580
(43) Veröffentlichungstag der Anmeldung: 09.11.2016
(73) Patentinhaber: Continental Automotive GmbH, 30165 Hannover (DE)
(72) Erfinder: REIL, Frank, 93049 Regensburg (DE); BOCK, Jürgen, 93077 Bad Abbach (DE); WEITERER, Peter, 93057 Regensburg (DE); KÖHLER, Karsten, 93059 Regensburg (DE)
(86) Internationale Anmeldenummer: PCT/EP2015/067643
(87) Internationale Veröffentlichungsnummer: WO 2016/020279

(56) Entgegenhaltungen:
- EP-A2- 2 645 190
- US-A1- 2013 061 456
- US-A1- 2013 126 595
- US-A1- 2014 165 026

## Beschreibung

Die Erfindung betrifft ein Verfahren zum Programmieren eines Sensornetzwerks mit einer Mehrzahl von Sensoren. Die Erfindung betrifft des Weiteren ein System zum Programmieren eines Sensornetzwerks mit einer Mehrzahl von Sensoren.

In Fahrzeugen sind häufig sehr viele Sensoren angeordnet, die im Rahmen eines Sensornetzwerks angeordnet sind. Hierbei werden häufig prinzipiell baugleiche Sensoren verwendet, die gegebenenfalls je nach Einsatz unterschiedlich betrieben werden müssen.

Aus der US 2013/0126595 A1 ist ein Bauteilprogrammiersystem bekannt, mit dem unterschiedliche Bauteile gemäß ihrem Einbauort unterschiedlich programmiert werden können. Dabei können mehrere Sensoren des Sensornetzwerks gemäß verschiedenster Zuordnungen von z. B. seinem Einbauort, seiner Teile- und/oder Seriennummer und/oder seiner Programmierungsinformation, die in Form einer Konfigurationsdatei vorliegen kann, wie gewünscht programmiert werden.

Die US 2013/0061456 A1 offenbart ein Verfahren zum Ersetzen eines Erfassungsgehäuses, das im Inneren eines Fahrzeugrades angeordnet ist.

Die Aufgabe, die der Erfindung zugrunde liegt, ist es, ein Verfahren und ein System zu schaffen, die dazu beitragen, dass ein Sensornetzwerk effizient programmiert wird.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren zum Programmieren eines Sensornetzwerks mit einer Mehrzahl von Sensoren. Eine erste Zuordnung einer ersten Kenngröße zu einer zweiten Kenngröße wird bereitgestellt. Die erste Kenngröße ist repräsentativ für eine Sensoridentifikation, und die zweite Kenngröße ist repräsentativ für einen Einbauort und/oder einer Systemfunktion des jeweiligen Sensors. Eine zweite Zuordnung wird bereitgestellt der zweiten Kenngröße zu einer dritten Kenngröße, die repräsentativ ist für vorgegebene Betriebsdaten des jeweiligen Sensors. Abhängig von der ersten Zuordnung und der zweiten Zuordnung wird eine dritte Zuordnung ermittelt der ersten Kenngröße zu der dritten Kenngröße. Abhängig von der dritten Zuordnung wird eine Programmierung der Mehrzahl von Sensoren mit der jeweiligen dritten Kenngröße durchgeführt. Die dritte Kenngröße umfasst eine Sensorstartzeit, die ein Zeitversatz ist, bezogen auf einen Synchronisationspuls, zu der der jeweilige Sensor seine Datenübertragung beginnt.

Ist die Sensorstartzeit beispielsweise 75 µs, so beginnt der jeweilige Sensor seine Datenübertragung 75 µs nach dem Synchronisationspuls. Hierdurch kann beispielsweise vermieden werden, dass es zu Datenkollisionen kommt. Alternativ oder zusätzlich umfasst die dritte Kenngröße andere Betriebsdaten, wie beispielsweise Kenndaten, wie Wertebereiche, Kennlinien und ähnliches.

Mittels der ersten Kenngröße kann beispielsweise jeder Sensor des Sensornetzwerks eindeutig identifiziert werden.

Durch eine Programmierung abhängig von der dritten Zuordnung kann das Sensornetzwerk sehr effektiv programmiert werden. So können beispielsweise prinzipiell baugleiche Sensoren, die an unterschiedlichen Stellen des Fahrzeugs eingebaut werden, nach dem Einbau unterschiedlich programmiert werden. Somit ist es nicht nötig, schon vor dem Einbau jeden Sensor zu programmieren. Hierdurch wird weiterhin ermöglicht, dass im Betrieb des Sensornetzwerks die Sensoren neu programmiert werden können, ohne dass diese ausgebaut werden müssen.

Das Sensornetzwerk ist insbesondere ein Fahrzeugsensornetzwerk.

Gemäß einer vorteilhaften Ausgestaltung ist das Sensornetzwerk ein Peripheral Sensor Interface 5, PSI5, Sensornetzwerk.

PSI5 ist ein offener Standard und basiert auf einer Zweidrahtleitung und wird in der Automobilelektronik zum Anschluss ausgelagerter Sensoren an elektronische Steuergeräte eingesetzt.

Gerade bei einem PSI5 Sensornetzwerk ist die Verwendung von baugleichen Sensoren gegebenenfalls fehleranfällig, da beispielsweise in einem PSI5 Sensornetzwerk keine Kollisionserkennung vorgesehen ist. Durch die Programmierung der Mehrzahl von Sensoren können baugleiche Sensoren in dem PSI5 Sensornetzwerk betrieben werden, da durch die Programmierung gegebenenfalls Datenkollisionen vermieden werden können.

Gemäß einer weiteren vorteilhaften Ausgestaltung umfasst die erste Kenngröße eine Seriennummer und/oder eine Typteilenummer.

Die Typteilenummer ist beispielsweise eine Nummer, die repräsentativ dafür ist, welcher Baureihe und/oder welcher Art der jeweilige Sensor ist. Die Seriennummer ist beispielsweise eine eindeutige Seriennummer jedes Sensors eines jeweiligen Typs.

Gemäß einer weiteren vorteilhaften Ausgestaltung umfasst die dritte Kenngröße eine Kanalnummer.

Das Sensornetzwerk umfasst beispielsweise mehrere Kanäle. Die Kanalnummer ist somit repräsentativ dafür, auf welchem Kanal der jeweilige Sensor seine Daten übertragen soll.

Gemäß einer weiteren vorteilhaften Ausgestaltung wird abhängig von der ersten Zuordnung die zweite Kenngröße in dem jeweiligen Sensor der Mehrzahl von Sensoren gespeichert.

Hierdurch kann beispielsweise auch nach einem Ausbau des jeweiligen Sensors mittels des jeweiligen Sensors überprüft werden, wo der jeweilige Sensor eingebaut war und/oder welche Systemfunktion er hatte.

Gemäß einem weiteren Aspekt zeichnet sich die Erfindung aus durch ein System aufweisend eine Vorrichtung mit einem Datenspeicher, wobei die Vorrichtung dazu ausgebildet ist, ein Verfahren nach gemäß dem ersten Aspekt oder eine vorteilhafte Ausgestaltung des Verfahrens gemäß dem ersten Aspekt durchzuführen.

Gemäß einer vorteilhaften Ausgestaltung weist das System eine externe Datenbank auf, und die erste Zuordnung wird von der externen Datenbank bereitgestellt, und die zweite Zuordnung wird von dem Datenspeicher der Vorrichtung bereitgestellt.

Gemäß einer weiteren vorteilhaften Ausgestaltung weist das System eine externe Datenbank auf, und die erste Zuordnung und die zweite Zuordnung werden von der externen Datenbank bereitgestellt.

Wird die erste Zuordnung und die zweite Zuordnung von der externen Datenbank bereitgestellt, so kann beispielsweise auch die dritte Zuordnung, beispielsweise extern, ermittelt werden und in der externen Datenbank gespeichert werden für eine spätere Verwendung der dritten Zuordnung, beispielsweise für eine spätere Programmierung des Sensornetzwerks.

Ausführungsbeispiele der Erfindung sind im Folgenden anhand der schematischen Zeichnungen näher erläutert. Es zeigen:
- Figur 1: ein System zum Programmieren eines Sensornetzwerks und
- Figur 2: ein Ablaufdiagramm zum Programmieren des Sensornetzwerks.

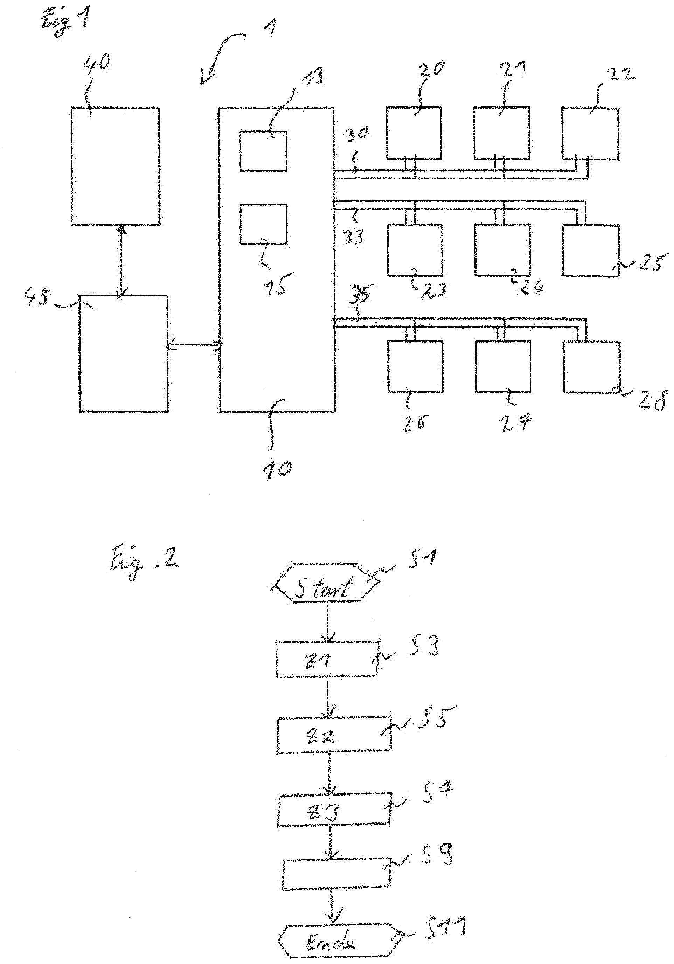

Figur 1 zeigt ein System 1. Das System 1 weist eine Vorrichtung 10 auf.

Die Vorrichtung 10 weist eine Recheneinheit 15 sowie einen Datenspeicher 13 auf. Auf dem Datenspeicher 13 können beispielsweise auch Programme gespeichert werden. Die Vorrichtung 10 umfasst beispielsweise eine oder mehrere Sensornetzwerkschnittstellen mit der sie mit einem Sensornetzwerk mit einer Mehrzahl von Sensoren 20 bis 28 verbunden ist.

Die jeweiligen Sensoren 20 bis 28 können beispielsweise über mehrere Kanäle mit der Vorrichtung 10 verbunden sein, beispielsweise über einen ersten Kanal 30, einen zweiten Kanal 33 und einen dritten Kanal 35.

Das Sensornetzwerk ist beispielsweise ein Fahrzeugnetzwerk, insbesondere ein PSI5 Sensornetzwerk. Die Mehrzahl von Sensoren 20 bis 28 umfassen beispielsweise Temperatursensoren und/oder Drucksensoren und/oder Öldrucksensoren und/oder Positionssensoren und/oder Beschleunigungssensoren.

Die Vorrichtung 10 kann beispielsweise auch über eine Schnittstelle 45, wie beispielsweise eine Diagnoseschnittstelle, beispielsweise mittels eines Diagnosesteckers mit einer externen Datenbank 40 gekoppelt sein zur Kommunikation mit der externen Datenbank 40.

Auf dem Datenspeicher 13 ist insbesondere ein Programm gespeichert, das mittels der Recheneinheit 15 der Vorrichtung 10 abgearbeitet werden kann und das im Folgenden anhand des Ablaufdiagramms der Figur 2 näher erläutert wird.

Das Programm wird in einem Schritt S1 gestartet, in dem gegebenenfalls Variablen initialisiert werden können.

In einem Schritt S3 wird eine erste Zuordnung Z1 einer ersten Kenngröße zu einer zweiten Kenngröße bereitgestellt. Die erste Kenngröße ist repräsentativ ist für eine Sensoridentifikation. Die zweite Kenngröße ist repräsentativ ist für einen Einbauort und/oder eine Systemfunktion des jeweiligen Sensor 20 bis 28. Die erste Zuordnung Z1 ist beispielsweise in der externen Datenbank 40 gespeichert und wird von der externen Datenbank 40 mittels der Schnittstelle 45 bereitgestellt.

Die erste Kenngröße umfasst beispielsweise eine Seriennummer und/oder eine Typteilenummer. Die erste Kenngröße ist beispielsweise mittels eines DataMatrix-Codes auf dem jeweiligen Sensor 20 bis 28 hinterlegt und wird beispielsweise bei einem Einbau des jeweiligen Sensors 20 bis 28 ausgelesen und in der ersten Zuordnung Z1 gespeichert.

In der Tabelle 1 ist beispielhaft die erste Zuordnung Z1 gezeigt. Die erste Zuordnung Z1 kann auch als Einbaudatenbank bezeichnet werden. MAF/Temp-Bank1 steht hierbei beispielsweise für einen Luftmassenmesser und Temperatursensor für eine Zylinderbank, T1 für einen vorgegebenen Temperatursensor beispielsweise im Abgasstrang, T2 für einen weiteren vorgegebenen Temperatursensor beispielsweise im Abgasstrang, EGR-Pos Bank 1 und EGR-Pos Bank 2 für Sensoren in der Abgasrückführung für verschiedene Zylinderbanken.

**Tabelle 1: Einbaudatenbank**

| Systemfunktion/Einbauort | Typteilenummer | Seriennummer |
|---|---|---|
| MAF/Temp-Bank1 | MFI82 | 1256368 |
| T1 | T26A1 | 222221 |
| T2 | T26A1 | 222222 |
| EGR-Pos Bank 2 | A23C5 | 1111111 |
| EGR-Pos Bank 1 | A23C5 | 1111112 |

In einem Schritt S5 wird eine zweite Zuordnung Z2 bereitgestellt der zweiten Kenngröße zu einer dritten Kenngröße, die repräsentativ ist für vorgegebene Betriebsdaten des jeweiligen Sensors 20 bis 28. Die zweite Zuordnung Z2 wird beispielsweise von dem Datenspeicher 13 oder von der externen Datenbank 40 bereitgestellt.

Die dritte Kenngröße umfasst beispielsweise eine Sensorstartzeit und/oder andere Betriebsdaten, wie beispielsweise Kenndaten, wie Wertebereiche, Kennlinien und ähnliches. Die dritte Kenngröße umfasst beispielsweise zusätzlich eine Kanalnummer.

In der Tabelle 2 ist beispielhaft die zweite Zuordnung Z2 gezeigt die auch als Systemdesignmatrix bezeichnet werden kann.

**Tabelle 2: Systemdesignmatrix**

| Systemfunktion/Einbauort | PSI5 Interface/Kanal | Startzeit |
|---|---|---|
| MAF-Bank1 | 1 | 75 µs |
| Temp MAF-Bank1 | 1 | 275 µs |
| T1 | 2 | 300 µs |
| T2 | 2 | 500 µs |
| EGR-Pos Bank 2 | 2 | 75 µs |
| EGR-Pos Bank 1 | 3 | 75 µs |

In einem Schritt S7 wird abhängig von der ersten Zuordnung Z1 und der zweiten Zuordnung Z2 eine dritte Zuordnung Z3 der ersten Kenngröße zu der dritten Kenngröße ermittelt.

So wird beispielsweise dem Temperatursensor mit der Seriennummer 222221 und/oder mit der Typteilenummer T26A1 eine Startzeit von 300 µs und der Kanal 2 zugeordnet und dem Temperatursensor mit der Seriennummer 222222 und/oder mit der Typteilenummer T26A1 eine Startzeit von 500 µs und der Kanal 2.

In einem Schritt S9 wird abhängig von der dritten Zuordnung Z3 eine Programmierung der Mehrzahl von Sensoren 20 bis 28 mit der jeweiligen dritten Kenngröße durchgeführt.

So wird beispielsweise dem Temperatursensor mit der Seriennummer 222221 und/oder mit der Typteilenummer T26A1 die Startzeit von 300 µs und der Kanal 2 einprogrammiert und dem Temperatursensor mit der Seriennummer 222222 und/oder mit der Typteilenummer T26A1 die Startzeit von 500 µs und der Kanal 2.

Zusätzlich kann auch abhängig von der ersten Zuordnung Z1 die zweite Kenngröße in dem jeweiligen Sensor 20 bis 28 und deren Mehrzahl von Sensoren 20 bis 28 gespeichert werden.

In einem Schritt S11 wird das Programm beendet und kann gegebenenfalls wieder in dem Schritt S1 gestartet werden.

Die Schritte S3-S7 können auch separat in einem anderen Programm durchgeführt werden, beispielsweise falls die erste Zuordnung Z1 und die zweite Zuordnung Z2 in der externen Datenbank 40 gespeichert sind.

Die Mehrzahl von Sensoren 20 bis 28 befindet sich vor der Programmierung beispielsweise in einem Ruhemodus, in dem die jeweiligen Sensoren 20 bis 28 keine Daten senden und wird nach dem Programmieren in einen aktiven Modus gesetzt in dem die jeweiligen Sensoren 20 bis 28 Daten senden. Die erfolgreiche Programmierung eines jeweiligen Sensors 20 bis 28 wird beispielsweise mit dem Setzen einer Aktivierungsflag bestätigt und nur falls die Aktivierungsflag gesetzt ist, wird der jeweilige Sensor 20 bis 28 in den aktiven Modus gesetzt und kann jederzeit über Rücksetzen des Aktivierungsflags wieder in den Ruhemodus gesetzt werden um gegebenenfalls eine Neu- oder Umprogrammierung durchzuführen.

Durch das gezeigte Vorgehen kann das Sensornetzwerk sehr effektiv programmiert werden. So können beispielsweise prinzipiell baugleiche Sensoren, die an unterschiedlichen Stellen eines Fahrzeugs eingebaut werden, nach dem Einbau unterschiedlich programmiert werden. Hierdurch können Teilenummer und Steckervarianten minimiert werden, da die jeweiligen Sensoren 20 bis 28 erst nach dem Einbau programmiert werden. Weiterhin können hierdurch Entwicklungs- und Teilequalifizierungskosten gesenkt werden und ein Fehleinbau minimiert werden, da die jeweiligen Sensoren 20 bis 28 erst nach dem Einbau programmiert werden. Weiterhin ist für eine Reprogrammierung keine zusätzliche Hardware nötig.

## Patentansprüche

1. Verfahren zum Programmieren eines Peripheral Sensor Interface 5, PSI5, Sensornetzwerks mit einer Mehrzahl von Sensoren (20 bis 28), bei dem
- eine erste Zuordnung (Z1) einer ersten Kenngröße zu einer zweiten Kenngröße bereitgestellt wird, wobei die erste Kenngröße repräsentativ ist für eine Sensoridentifikation und die zweiten Kenngröße repräsentativ ist für eine Systemfunktion des jeweiligen Sensors (20 bis 28),
- eine zweite Zuordnung (Z2) bereitgestellt wird der zweiten Kenngröße zu einer dritten Kenngröße, die repräsentativ ist für vorgegebene Betriebsdaten des jeweiligen Sensors (20 bis 28),
- abhängig von der ersten Zuordnung (Z1) und der zweiten Zuordnung (Z2) eine dritte Zuordnung (Z3) der ersten Kenngröße zu der dritten Kenngröße ermittelt wird und
- abhängig von der dritten Zuordnung (Z3) eine Programmierung der Mehrzahl von Sensoren (20 bis 28) mit der jeweiligen dritten Kenngröße durchgeführt wird, wobei die dritte Kenngröße eine Sensorstartzeit umfasst, die ein Zeitversatz ist, bezogen auf einen Synchronisationspuls, zu der der jeweilige Sensor (20 bis 28) seine Datenübertragung beginnt.

2. Verfahren nach Anspruch 1, bei dem die erste Kenngröße eine Seriennummer und/oder eine Typteilenummer umfasst.

3. Verfahren nach einem der vorhergehenden Ansprüche, bei dem die dritte Kenngröße eine Kanalnummer umfasst.

4. Verfahren nach einem der vorhergehenden Ansprüche, bei dem abhängig von der ersten Zuordnung (Z1) die zweite Kenngröße in dem jeweiligen Sensor der Mehrzahl von Sensoren (20 bis 28) gespeichert wird.

5. System (1) aufweisend eine Vorrichtung (10) mit einem Datenspeicher (13), wobei die Vorrichtung (10) dazu ausgebildet ist ein Verfahren nach einem der Ansprüche 1 bis 4 durchzuführen.

6. System (1) nach Anspruch 5, aufweisend eine externe Datenbank (40), wobei die erste Zuordnung (Z1) von der externen Datenbank (40) bereitgestellt wird und die zweite Zuordnung (Z2) von dem Datenspeicher (13).

7. System (1) nach Anspruch 5, aufweisend eine externe Datenbank (40), wobei die erste Zuordnung (Z1) und die zweite Zuordnung (Z2) von der externen Datenbank (40) bereitgestellt werden.

## Claims

1. Method for programming a peripheral sensor interface 5, PSI5, sensor network having a plurality of sensors (20 to 28), in which
- a first association (Z1) between a first parameter and a second parameter is provided, wherein the first parameter is representative of a sensor identification and the second parameter is representative of a system function of the respective sensor (20 to 28),
- a second association (Z2) is provided between the second parameter and a third parameter, which is representative of prescribed operating data for the respective sensor (20 to 28),
- the first association (Z1) and the second association (Z2) are taken as a basis for ascertaining a third association (Z3) between the first parameter and the third parameter, and
- the third association (Z3) is taken as a basis for performing programming for the plurality of sensors (20 to 28) with the respective third parameter, wherein the third parameter comprises a sensor start time, which is a time offset in relation to a synchronization pulse, at which sensor start time the respective sensor (20 to 28) begins its data transmission.

2. Method according to Claim 1, in which the first parameter comprises a serial number and/or a type part number.

3. Method according to one of the preceding claims, in which the third parameter comprises a channel number.

4. Method according to one of the preceding claims, in which the first association (Z1) is taken as a basis for storing the second parameter in the respective sensor from the plurality of sensors (20 to 28).

5. System (1) having an apparatus (10) having a data memory (13), wherein the apparatus (10) is designed to perform a method according to one of Claims 1 to 4.

6. System (1) according to Claim 5, having an external database (40), wherein the first association (Z1) is provided by the external database (40) and the second association (Z2) is provided by the data memory (13).

7. System (1) according to Claim 5, having an external database (40), wherein the first association (Z1) and the second association (Z2) are provided by the external database (40).

## Revendications

1. Procédé de programmation d'un réseau de capteurs du type Peripheral Sensor Interface 5, PSIS, comportant une pluralité de capteurs (20 à 28), dans lequel
- une première association (Z1) d'une première grandeur est réalisée avec une deuxième grandeur, dans lequel la première grandeur est représentative d'une identification de capteur et la deuxième grandeur est représentative d'une fonction système du capteur respectif (20 à 28),
- une deuxième association (Z2) de la deuxième grandeur est réalisée avec une troisième grandeur qui est représentative de données de fonctionnement prédéterminées du capteur respectif (20 à 28),
- une troisième association (Z3) de la première grandeur avec la troisième grandeur est déterminée en fonction de la première association (Z1) et de la deuxième association (Z2), et
- une programmation de la pluralité de capteurs (20 à 28) avec la troisième grandeur respective est effectuée en fonction de la troisième association (Z3), dans lequel la troisième grandeur comprend un temps de démarrage du capteur qui est un décalage temporel, par rapport à une impulsion de synchronisation, au bout duquel le capteur respectif (20 à 28) commence sa transmission de données.

2. Procédé selon la revendication 1, dans lequel la première grandeur comprend un numéro de série et/ou un numéro de pièce type.

3. Procédé selon l'une des revendications précédentes, dans lequel la troisième grandeur comprend un numéro de canal.

4. Procédé selon l'une des revendications précédentes, dans lequel la deuxième grandeur est stockée dans le capteur respectif de la pluralité de capteurs (20 à 28) en fonction de la première association (Z1).

5. Système (1) comportant un dispositif (10) muni d'une mémoire de données (13), dans lequel le dispositif (10) est conçu pour mettre en oeuvre un procédé selon l'une des revendications 1 à 4.

6. Système (1) selon la revendication 5 comportant une base de données externe (40), dans lequel la première association (Z1) est réalisée par la base de données externe (40) et la deuxième association (Z2) est réalisée par la mémoire de données (13).

7. Système (1) selon la revendication 5, comportant une base de données externe (40), dans lequel la première association (Z1) et la deuxième association (Z2) sont réalisées par la base de données externe (40).
